# DEMANDE DE BREVET EUROPEEN

(11) **EP 1 650 995 A1**
(43) Date de publication de la demande: **26.04.2006**
(21) Numéro de dépôt: 05109612.1
(22) Date de dépôt: 17.10.2005
(51) Int. Cl.: H04Q 7/34

(54) **Dispositif de contrôle d'actions correctives dans un réseau de communication**

(30) Priorité: 20.10.2004 FR 0411178
(71) Demandeur: ALCATEL, 75008 Paris (FR)
(72) Inventeur: Gonguet, Arnaud, 75013, PARIS (FR); Delegue, Gérard, 94230, CACHAN (FR); Betge-Brezetz, Stéphane, 75015, PARIS (FR); Robinson, Julien, 75014, PARIS (FR); Fournigault, Lionel, 91190, GIF SUR YVETTE (FR)
(74) Mandataire: Chaffraix, Sylvain

(57) **Abrégé**

Un dispositif (D) est dédié au contrôle d'actions correctives destinées à des éléments paramétrables d'un réseau radio, comprenant une base d'informations (BI) stockant des données primaires représentatives des valeurs des paramètres gérés des éléments paramétrables (C1-C3, NE) et d'une topologie de ce réseau. Ce dispositif de contrôle (D) comprend i) une base de règles (BR) stockant des données représentatives de règles de contrôle de paramétrage approprié des éléments paramétrables (C1-C3, NE), ii) des moyens de traitement (MT) chargés, lorsqu'ils reçoivent la désignation d'au moins un élément paramétrable (C2) du réseau, cause d'un problème au sein de ce dernier, et des données représentatives d'au moins une action corrective à appliquer à cet élément désigné (C2), de constituer une copie locale d'une partie des données primaires, qui sont stockées dans la base d'informations (BI) et sont représentatives de l'élément désigné (C2) et d'éléments voisins de celui-ci (C1, C3) et de la topologie associée à ces éléments désigné et voisins, et iii) des moyens de contrôle (MC) chargés d'appliquer certaines au moins des règles à la copie locale compte tenu de chaque action corrective désignée, afin de déterminer l'influence de chaque action corrective désignée sur les éléments désigné et voisins, et de délivrer un message comportant des données représentatives de cette influence.

## Description

L'invention concerne les réseaux de communication cellulaires (ou mobiles), et plus précisément la résolution des problèmes introduits par les éléments paramétrables de tels réseaux.

On entend ici par « élément paramétrable », tout constituant d'un réseau dont le fonctionnement peut être géré, c'est-à-dire configuré, par un gestionnaire de réseau d'un réseau de communication cellulaire (ou plus simplement réseau radio), comme par exemple un système de gestion de réseau ou NMS (pour « Network Management System »). Il pourra donc s'agir, par exemple, d'une cellule, dans laquelle des terminaux de communication mobiles peuvent établir des communications, ou d'un équipement de réseau, tel qu'un routeur ou une station de base.

Par ailleurs, on entend ici par « réseau radio » tout type de réseau de communication cellulaire, et notamment ceux de types 2G, comme les réseaux de type GSM, 2,5G, comme les réseaux de type GPRS ou EDGE, 3G, comme les réseaux de type UMTS, 4G, WIFI et WIMAX.

Les éléments paramétrables des réseaux radio sont à l'origine de problèmes et de dysfonctionnements qui nuisent au bon fonctionnement de ces derniers, et notamment au respect de la qualité de service qui fait l'objet d'accords de niveau de service (ou SLAs pour « Service Level Agreements ») passés entre les opérateurs des réseaux et leurs clients. Parmi ces problèmes et dysfonctionnements, on peut par exemple citer un taux d'interruption d'appel (ou « call drop rate ») trop élevé.

Afin de déterminer la cause, dite racine (ou « root »), d'un problème ou dysfonctionnement, et éventuellement de proposer des actions correctives, les opérateurs de réseau disposent d'outils d'optimisation, généralement intégrés dans le système de gestion de réseau (ou NMS) de leur réseau. De tels outils fonctionnent par exemple à partir d'un diagramme causal décrivant toutes les causes possibles d'un problème, puis les causes de ces causes, et ainsi de suite jusqu'à une ou plusieurs causes racines.

Par exemple, la cause racine d'un taux d'interruption d'appel trop élevé peut être un problème de transfert intercellulaire sans coupure (ou « handover »).

Une action corrective consiste généralement à modifier ou adapter un ou plusieurs paramètres, associés à une cause racine, d'un ou plusieurs éléments paramétrables. Lorsque l'outil détermine plusieurs actions correctives, c'est habituellement l'opérateur qui choisit celle qui doit être instaurée dans son réseau.

Les réseaux radio devenant toujours plus complexes et comportant toujours plus d'éléments paramétrables, et les interactions entre les technologies (comme par exemple EDGE, UMTS et WiFi) devenant de plus en plus nombreuses, les actions correctives instaurées au niveau d'un élément paramétrable induisent fréquemment des problèmes ou dysfonctionnements « collatéraux » au niveau des éléments paramétrables voisins. En d'autres termes, il arrive fréquemment qu'une action corrective, destinée à remédier à un problème, induise un ou plusieurs autres problèmes ou dysfonctionnements. Or, des vérifications basiques ne peuvent pas permettre de détecter les « dommages » collatéraux induits par de nombreuses actions correctives.

Pour remédier à cet inconvénient il est certes possible de construire un simulateur extensif décrivant non seulement toute la topologie du réseau, mais également tous les types d'éléments paramétrables et toutes leurs interactions. Mais, un tel simulateur est particulièrement difficile à fabriquer, et donc particulièrement onéreux, et le temps de traitement, qui lui est nécessaire pour effectuer une prédiction extensive des effets d'une action corrective, est incompatible avec le temps dont dispose un gestionnaire de réseau pour remédier à un problème ou dysfonctionnement.

Aucun outil connu n'apportant une entière satisfaction, l'invention a donc pour but d'améliorer la situation.

Elle propose à cet effet un dispositif de contrôle d'actions correctives destinées à des éléments paramétrables d'un réseau radio, comprenant une base d'informations stockant des données primaires représentatives des valeurs des paramètres gérés des éléments paramétrables et d'une topologie de ce réseau.

Ce dispositif de contrôle se caractérise par le fait qu'il comprend
- une base de règles stockant des données représentatives de règles de contrôle de paramétrage approprié des éléments paramétrables,
- des moyens de traitement chargés, lorsqu'ils reçoivent la désignation d'au moins un élément paramétrable du réseau, cause d'un problème (ou dysfonctionnement) au sein de ce dernier, et des données représentatives d'au moins une action corrective à appliquer à cet élément désigné, de constituer une copie locale d'une partie des données primaires, qui sont stockées dans la base d'informations et sont représentatives de l'élément désigné et d'éléments voisins de celui-ci et de la topologie associée à ces éléments désigné et voisins, et
- des moyens de contrôle chargés d'appliquer certaines au moins des règles à la copie locale compte tenu de chaque action corrective désignée, afin de déterminer l'influence de chaque action corrective désignée sur les éléments désigné et voisins, et de délivrer un message comportant des données représentatives de cette influence.

Le dispositif de contrôle selon l'invention peut comporter d'autres caractéristiques qui peuvent être prises séparément ou en combinaison, et notamment :
- ses moyens de traitement peuvent être chargés de transmettre aux moyens de contrôle la copie locale intégrant chaque action corrective désignée,
- une mémoire peut être couplée aux moyens de traitement afin de stocker la copie locale qui intègre chaque action corrective désignée, dite copie locale en cours, ainsi qu'éventuellement la copie locale initialement constituée, avant intégration de chaque action corrective désignée,
- ses moyens de traitement peuvent être chargés, lorsqu'ils reçoivent des données représentatives d'au moins une nouvelle action corrective à appliquer à l'élément désigné, compte tenu de la copie locale en cours, d'extraire cette dernière de la mémoire afin d'y intégrer chaque nouvelle action corrective désignée avant de la stocker dans la mémoire et de la transmettre aux moyens de contrôle, afin qu'ils déterminent l'influence de chaque action corrective désignée sur les éléments désigné et voisins,
- ses moyens de traitement peuvent être chargés, lorsqu'ils reçoivent des données représentatives d'au moins une nouvelle action corrective à appliquer à l'élément désigné, compte tenu d'une copie locale antérieure à celle en cours, d'extraire cette dernière de la mémoire afin d'y intégrer chaque nouvelle action corrective désignée avant de la stocker dans la mémoire et de la transmettre aux moyens de contrôle, afin qu'ils déterminent l'influence de chaque action corrective désignée sur les éléments désigné et voisins,
- ses moyens de traitement peuvent être chargés, lorsqu'ils reçoivent des données représentatives d'au moins une nouvelle action corrective à appliquer à l'élément désigné, compte tenu de la copie locale initiale, d'extraire cette dernière de la mémoire afin d'y intégrer chaque nouvelle action corrective désignée avant de la transmettre aux moyens de contrôle afin qu'ils déterminent l'influence de chaque action corrective désignée sur les éléments désigné et voisins,
- ses moyens de contrôle peuvent être agencés sous la forme d'un moteur de règles,
- certaines au moins des actions correctives peuvent être constituées d'une valeur de paramètre à instaurer en lieu et place d'une valeur de paramètre d'élément désigné dans une copie locale,
- certaines au moins des règles peuvent être agencées sous la forme d'une condition à vérifier suivie d'une action corrective à effectuer si cette condition est vérifiée.

L'invention propose également un outil d'optimisation, de paramétrage d'éléments paramétrables d'un réseau radio, comprenant, d'une première part, une base d'informations, stockant des données primaires représentatives des valeurs des paramètres gérés des éléments paramétrables et d'une topologie du réseau, d'une deuxième part, des moyens de diagnostic chargés de délivrer les désignations d'une cause d'un problème survenu au sein du réseau et d'au moins un élément paramétrable de ce réseau, cause du problème, et d'une troisième part, un dispositif de contrôle du type de celui présenté ci-avant, couplé à la base d'informations.

Un tel outil peut également comprendre des moyens de configuration chargés de générer des commandes représentatives d'au moins une action corrective à appliquer à l'élément désigné, contrôlée par le dispositif de contrôle et n'entraînant pas de dommage collatéral sur des éléments voisins de l'élément désigné, afin de corriger la cause déterminée par les moyens de diagnostic.

L'invention propose également un système de gestion de réseau comprenant un outil d'optimisation du type de celui présenté ci-avant.

L'invention propose également un système de gestion de réseau comprenant un outil d'optimisation classique, couplé à un dispositif de contrôle du type de celui présenté ci-avant.

D'autres caractéristiques et avantages de l'invention apparaîtront à l'examen de la description détaillée ci-après, et des dessins annexés, sur lesquels :
- la figure 1 illustre de façon très schématique un réseau de communication cellulaire équipé d'un exemple de réalisation d'un dispositif de contrôle selon l'invention, et
- la figure 2 illustre de façon schématique un exemple d'enchaînement de tests d'actions correctives aboutissant à la détermination d'une suite d'actions correctives n'induisant pas de dommage collatéral.

Les dessins annexés pourront non seulement servir à compléter l'invention, mais aussi contribuer à sa définition, le cas échéant.

L'invention a pour objet de permettre la vérification rapide de l'influence d'actions destinées à corriger des problèmes ou des dysfonctionnements introduits dans un réseau de communication cellulaire par ses éléments paramétrables, en vue de la détermination d'une suite d'actions correctives, n'induisant pas de dommage collatéral, à appliquer à ces éléments paramétrables.

Comme indiqué dans la partie introductive, l'invention concerne tout type de réseau de communication cellulaire (ci-après appelé réseau radio), et notamment ceux de types 2G, comme les réseaux de type GSM, 2,5G, comme les réseaux de type GPRS ou EDGE, 3G, comme les réseaux de type UMTS, 4G, WIFI et WIMAX.

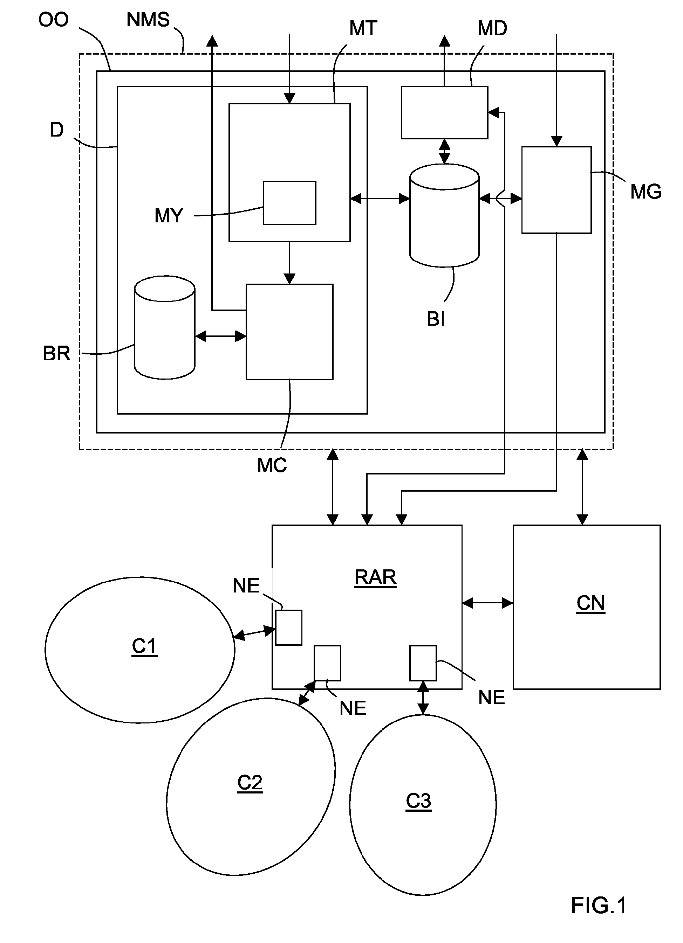

Comme le sait l'homme de l'art, et comme cela est schématiquement illustré sur la figure 1, un réseau radio peut, d'une façon très schématique mais néanmoins suffisante à la compréhension de l'invention, être résumé à un coeur de réseau (ou « Core Network ») CN couplé à un réseau d'accès radio RAR (appelé UTRAN dans le cas d'un réseau UMTS et BSS dans le cas d'un réseau GSM), lui-même raccordé à un système de gestion de réseau ou NMS (pour « Network Management System »).

Le réseau d'accès radio RAR comporte notamment un ensemble d'équipements de réseau NE et notamment des stations de base (appelées Node Bs dans le cas d'un réseau UMTS et BTSs dans le cas d'un réseau GSM) et des contrôleurs de réseau radio ou noeuds (appelés RNCs dans le cas d'un réseau UMTS et BSCs dans le cas d'un réseau GSM), raccordés entre eux. Le système de gestion de réseau NMS est par ailleurs relié aux stations de base via les contrôleurs de réseau radio.

Chaque station de base (Node B ou BTS) est associée à au moins une cellule Ci couvrant une zone radio dans laquelle des terminaux mobiles peuvent établir (ou poursuivre) des liaisons radio. Ici, l'indice i est compris entre les valeurs 1 et 3, mais il peut prendre n'importe quelle valeur non nulle.

On entend ici par « terminal mobile » tout terminal de communication mobile ou portable capable d'échanger des données sous la forme de signaux radio, soit avec un autre terminal ou équipement de réseau, via leur(s) réseau(x) de rattachement, soit avec son propre réseau de rattachement. Il peut donc s'agir, par exemple, de téléphones mobiles, ou d'ordinateurs fixes ou portables ou d'assistants personnels numériques (ou PDA) équipés d'un module de communication radio.

Le coeur de réseau CN comprend notamment un ensemble d'équipements de réseau (non représentés), raccordé aux contrôleurs de réseau radio (RNCs ou BSCs) ainsi qu'au système de gestion de réseau NMS.

Les cellules Ci ainsi que les équipements de réseaux NE constituent des éléments paramétrables du réseau radio. On entend ici par « élément paramétrable » un élément pouvant être configuré à distance par le système de gestion de réseau NMS et dont le fonctionnement peut être géré (ou supervisé) également à distance par ledit système de gestion de réseau NMS.

Cette gestion ou supervision se fait à partir d'indicateurs dont les valeurs en cours définissent au moins partiellement l'état en cours de certains équipements NE ou éléments Ci de réseau, comme par exemple les cellules, les routeurs, les stations de base (Node Bs ou BTSs) et les contrôleurs de réseau radio (RNCs ou BSCs).

Un indicateur n'est pas nécessairement observé (ou mesuré) de façon directe au niveau d'un équipement de réseau. Sa valeur en cours est généralement calculée à partir des valeurs de compteurs collectées auprès d'un ou plusieurs équipements de réseau et consolidées (ou agrégées) au niveau du réseau.

Les cellules Ci étant des éléments de type immatériel, elles sont gérées (ou supervisées) par des indicateurs dont les valeurs sont définies à partir des valeurs de compteurs stockées dans les équipements de réseau NE dont elle dépendent.

On entend donc ici par « indicateur » une variable dont la valeur définit au moins partiellement l'état en cours d'un élément paramétrable. Il s'agit par exemple de la bande passante utilisée, ou du taux de perte de paquets de données, ou encore du nombre d'appels établis.

La collecte des valeurs des compteurs (ou plus généralement des informations) permettant de calculer les valeurs d'indicateurs se fait au moyen d'un gestionnaire de réseau qui est généralement implanté dans le système de gestion de réseau NMS.

Plus précisément, le gestionnaire de réseau est généralement chargé de récupérer au niveau des équipements de réseau NE les valeurs en cours de compteurs qu'ils stockent, puis de consolider ses valeurs de compteurs afin de calculer les valeurs en cours des indicateurs correspondants, pour les analyser puis transmettre le résultat de l'analyse à l'opérateur du réseau.

Cette analyse peut par exemple consister à comparer le comportement de l'élément paramétrable, défini par les ensembles de valeurs d'indicateurs obtenus, par rapport à un comportement en fonctionnement normal, défini par un profil de mesure, ou bien à comparer à un seuil d'alarme la valeur courante d'un indicateur de l'élément paramétrable.

On entend ici par « profil de mesure » un ensemble d'au moins une ligne de base (ou « baseline ») représentative de l'évolution temporelle normale d'un indicateur sur une période choisie, par exemple un jour, ou une semaine, ou encore un mois.

Chaque ensemble de valeurs d'indicateur obtenu est par exemple comparé à la ligne de base correspondante (ou à une éventuelle enveloppe), ou bien à un seuil, valeur après valeur. Si au moins un ensemble de valeurs d'indicateur ne correspond pas à la ligne de base correspondante, ou bien au seuil correspondant, le module de diagnostic MD délivre une alarme de manière à signaler à l'opérateur que le comportement de l'élément paramétrable désigné est anormal.

Les alarmes peuvent être transmises à un outil d'optimisation OO, qui peut être implanté, comme illustré, dans le système de gestion de réseau NMS.

L'outil d'optimisation OO comprend un module de diagnostic MD agencé de manière à déterminer la ou les causes racines d'un problème survenu au niveau de l'élément paramétrable (ou plus simplement l'élément) désigné dans un message d'alarme reçu.

Le module de diagnostic MD peut être également agencé de manière à déterminer chaque action corrective à entreprendre pour remédier à chaque cause racine déterminée.

En variante ou en complément, l'opérateur peut également déterminer lui-même chaque action corrective à entreprendre pour remédier à chaque cause racine déterminée par le module de diagnostic MD.

L'invention intervient à ce stade. Elle a en effet pour but de permettre de tester l'influence de chaque action corrective à entreprendre, proposée par l'opérateur et/ou par le module de diagnostic MD.

Pour ce faire, l'invention propose un dispositif D chargé de contrôler les actions correctives devant être appliquées à des éléments Ci, NE du réseau radio.

Comme illustré sur la figure 1, le dispositif de contrôle D peut faire partie de l'outil d'optimisation OO. Mais, cela n'est pas obligatoire. Il peut en effet faire partie du système de gestion NMS et être couplé à son outil d'optimisation OO ou bien être couplé au système de gestion NMS et notamment à son outil d'optimisation OO.

Le dispositif de contrôle D, selon l'invention, comprend au moins un module de traitement MT, un module de contrôle MC et une base de règles BR.

Le module de traitement MT est couplé à une base d'informations BI implantée préférentiellement dans l'outil d'optimisation OO et dans laquelle sont stockées des données primaires représentatives de l'ensemble des données manipulables des éléments paramétrables du réseau Ci et NE, comme par exemple les valeurs des paramètres gérés des éléments paramétrables Ci et NE (compteurs/indicateurs et paramètres de configuration), et d'une topologie de ce réseau.

Ce module de traitement MT est chargé d'accéder à la base d'informations BI chaque fois qu'il reçoit, d'une part, la désignation d'au moins un élément du réseau, cause d'un problème (ou dysfonctionnement) au sein de ce dernier, et d'autre part, des données représentatives d'au moins une action corrective à appliquer à cet élément désigné.

Cette désignation d'élément et ces données d'action sont préférentiellement transmises par l'opérateur, via, par exemple, une interface homme/machine du système de gestion de réseau NMS. Mais, on peut envisager une variante dans laquelle la désignation d'élément et les données d'action correspondantes sont fournies par le module de diagnostic MD de l'outil d'organisation OO.

L'accession à la base d'informations BI permet au module de traitement MT de constituer une copie locale d'une partie des données primaires qu'elle stocke et plus précisément de celles qui sont représentatives de l'élément désigné et d'éléments voisins de celui-ci, ainsi que de la topologie qui est associée à ces éléments désigné et voisins. Par exemple l'élément désigné est la cellule C2 et les éléments voisins sont les cellules C1 et C3.

Préférentiellement, le dispositif de contrôle D comprend une mémoire MY dans laquelle le module de traitement MT stocke la copie locale qu'il constitue, ci-après appelée copie locale initiale. Comme on le verra plus loin, cela permet au module de traitement MT, en cas de besoin, de revenir à la version initiale de la copie locale pour y intégrer une ou plusieurs nouvelles actions correctives à tester sans avoir besoin d'accéder de nouveau à la base d'informations.

Cette mémoire MY peut, comme illustré, faire partie du module de traitement MT, mais cela n'est pas une obligation.

Le module de traitement MT est chargé d'intégrer dans la copie locale initiale au moins l'une des actions correctives définies par les données reçues qui accompagnent la désignation de l'élément, par exemple C2, afin de constituer une copie locale dite « en cours ».

Tout type d'action corrective peut être envisagé. Cependant, une action corrective se présente généralement sous la forme d'une valeur de paramètre de configuration à instaurer au niveau d'un élément désigné.

Le module de traitement MT est préférentiellement agencé de manière à stocker dans la mémoire MY chaque copie locale en cours qu'il communique au module de contrôle MC. Comme on le verra plus loin, cela permet au module de traitement MT, en cas de besoin, de revenir à une version antérieure de la copie locale en cours pour y intégrer une ou plusieurs nouvelles actions correctives à tester sans avoir besoin de recommencer toutes les actions effectuées antérieurement pour aboutir à cette version antérieure.

Le module de contrôle MC est chargé d'appliquer à la copie locale en cours, qui lui est communiquée par le module de traitement MT et qui intègre chaque dernière action désignée (reçue), certaines au moins des règles qui se trouvent stockées dans la base de règles BR à laquelle il est couplé.

La base de règles BR stocke des données représentatives de règles de contrôle qui correspondent à un paramétrage approprié d'au moins un élément Ci, NE. On entend ici par « paramétrage approprié » une valeur de paramètre de configuration ou un intervalle de valeurs de paramètre de configuration qui, lorsqu'il est appliqué (ou instauré) au niveau d'un élément Ci, NE, lui permet de fonctionner sans que cela n'induise de problème ou de dysfonctionnement au niveau d'éléments voisins.

Par exemple, chaque règle se présente sous la forme d'une condition à vérifier suivie d'une action à effectuer si cette condition est vérifiée : « Si <condition> Alors (<action>) ». Une condition est ici un test binaire destiné à vérifier qu'un paramètre de configuration testé (défini par une action corrective) appartient à un intervalle de valeurs « acceptables » prédéterminé.

Une règle de contrôle peut par exemple se présenter sous la forme suivante : « Si le nombre de cellules adjacentes est strictement supérieur à cinq (5), alors le nombre maximal de cellules voisines de l'une des cellules adjacentes est égal à quatre (4) ».

Une autre règle de contrôle peut par exemple se présenter sous la forme suivante : « Si la condition est vraie, alors P3 = P1 + P2 », où P1, P2 et P3 sont des valeurs de paramètres, et « Si P3 est strictement supérieur à 5, alors P3 est trop grand ». Ici, dès que P1 et/ou P2 sont modifiés la base d'informations BI est modifiée pour refléter la nouvelle valeur de P3.

Les règles de contrôle étant génériques, le module de contrôle MC les applique à chaque copie locale en cours. Ainsi, chaque valeur de paramètre appartenant à la copie locale en cours peut être testée au moyen de règles de contrôle de la base de règles BR. A cet effet, le module de contrôle MC est par exemple agencé sous la forme d'un moteur de règles (ou « rule engine »).

Si un paramètre de configuration testé appartient à l'intervalle de valeurs acceptables pour lequel il est prévu, cela indique que l'action corrective associée n'induit pas de dommage collatéral au niveau des éléments voisins de l'élément désigné, cause d'un problème détecté par le module de diagnostic MD. Dans ce cas, le module de contrôle MC délivre, à destination de l'opérateur, un message signalant que l'action corrective peut être instaurée sans qu'elle ne risque d'influencer le fonctionnement d'au moins un élément voisin de l'élément désigné. L'opérateur peut alors éventuellement tester l'influence d'une nouvelle action corrective sur l'élément initialement désigné, si cela s'avère nécessaire. Une nouvelle action corrective peut être cumulée à une ou plusieurs actions correctives précédentes.

En revanche, si un paramètre de configuration testé n'appartient pas à l'intervalle de valeurs acceptables pour lequel il est prévu, cela indique que l'action corrective associée induit un ou plusieurs dommages collatéraux au niveau d'un ou plusieurs éléments voisins de l'élément désigné, cause d'un problème détecté par le module de diagnostic MD. Dans ce cas, le module de contrôle MC délivre, à destination de l'opérateur, un message signalant que l'action corrective ne peut pas être instaurée et la ou les raisons. L'opérateur peut alors tester l'influence d'une nouvelle action corrective sur l'élément initialement désigné. Cette nouvelle action corrective peut être éventuellement cumulée à une ou plusieurs actions correctives précédentes, permettant ainsi, par exemple, de corriger un effet de bord. En effet, lorsque l'analyse de l'influence d'une valeur de paramètre de configuration (intégrée dans une copie locale), au moyen des règles stockées dans la base de règles BR, aboutit à un résultat qui est ni oui (« OK »), ni non (« NOK »), le message peut expliquer un problème, comme par exemple un effet de bord, non pas afin qu'une autre action corrective soit proposée, mais afin que des actions complémentaires permettent de supprimer ledit problème.

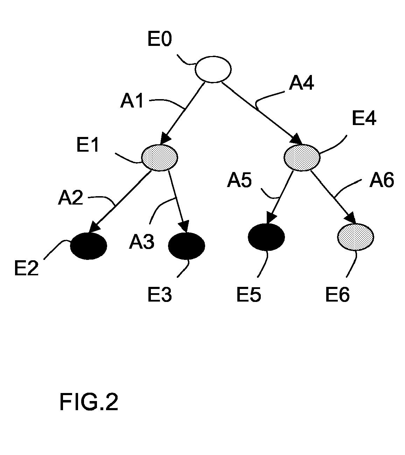

On a représenté schématiquement sur la figure 2 un exemple non limitatif d'enchaînement de tests (ou vérifications) d'actions correctives aboutissant à la détermination d'une suite d'actions correctives n'induisant pas de dommage collatéral.

Plus précisément dans cet exemple, l'opérateur souhaite tester l'influence de deux types d'actions correctives sur les voisins, par exemple C1 et C3, d'un élément désigné, par exemple C2. Il ordonne donc au module de traitement MT de tester l'influence d'une première action A1, représentative d'un premier type d'action, sur les voisins C1 et C3 de l'élément désigné C2.

Le module de traitement MT accède alors à la base d'informations BI afin de constituer une copie locale initiale, matérialisée par une ellipse blanche référencée E0, qu'il stocke dans la mémoire MY, et adaptée à l'élément désigné C2 et à ses éléments voisins C1 et C3. Puis, le module de traitement MT intègre dans la copie locale initiale E0 une première action A1, ce qui donne une première copie locale en cours, matérialisée par une ellipse grise référencée E1, qu'il stocke également dans la mémoire MY et transmet au module de contrôle MC.

Le module de contrôle MC teste la première copie locale en cours E1, et notamment la première action A1. On considère ici que cette première action A1 n'influence pas les éléments voisins C1 et C3 de l'élément désigné C2.

L'opérateur ordonne alors au module de traitement MT de tester l'influence d'une deuxième action A2, représentative d'un deuxième type d'action, sur les voisins C1 et C3 de l'élément désigné C2.

Le module de traitement MT accède alors à la mémoire MY afin de récupérer la copie locale en cours E1 qu'elle stocke, puis, il intègre dans cette dernière la deuxième action A2 (en complément de la première action A1), ce qui donne une deuxième copie locale en cours, matérialisée par une ellipse noire référencée E2, qu'il stocke également dans la mémoire MY et transmet au module de contrôle MC.

Le module de contrôle MC teste la deuxième copie locale en cours E2, et notamment sa deuxième action A2. On considère ici que cette deuxième action A2 influence les éléments voisins C1 et C3 de l'élément désigné C2. Le module de contrôle MC signale cette influence à l'opérateur, ainsi que sa ou ses causes.

L'opérateur détermine alors une troisième action A3, représentative du deuxième type d'action et qu'il espère sans influence sur les éléments voisins C1 et C3. Il ordonne alors au module de traitement MT de tester l'influence de cette troisième action A3 sur les voisins C1 et C3 de l'élément désigné C2.

Le module de traitement MT accède alors à la mémoire MY afin de récupérer la copie locale E1, antérieure à celle en cours E2, qu'elle stocke. Puis, il intègre dans cette dernière la troisième action A3 (en complément de la première action A1), ce qui donne une troisième copie locale en cours, matérialisée par une ellipse noire référencée E3, qu'il stocke également dans la mémoire MY et transmet au module de contrôle MC.

Le module de contrôle MC teste la troisième copie locale en cours E3, et notamment sa troisième action A3. On considère ici que cette troisième action A3 influence également les éléments voisins C1 et C3 de l'élément désigné C2. Le module de contrôle MC signale cette influence à l'opérateur, ainsi que sa ou ses causes.

L'opérateur n'ayant pas d'alternative d'action corrective du deuxième type, il détermine alors une quatrième action corrective A4, du premier type, altemative de la première action A1 et qu'il espère sans influence sur les éléments voisins C1 et C3.

L'opérateur ordonne alors au module de traitement MT de tester l'influence de la quatrième action A4 sur les voisins C1 et C3 de l'élément désigné C2.

Le module de traitement MT accède alors à la mémoire MY afin de récupérer la copie locale initiale E0 qu'elle stocke, puis, il intègre dans cette dernière la quatrième action A4, ce qui donne une quatrième copie locale en cours, matérialisée par une ellipse grise référencée E4, qu'il stocke également dans la mémoire MY et transmet au module de contrôle MC.

Le module de contrôle MC teste la quatrième copie locale en cours E4, et notamment sa quatrième action A4. On considère ici que cette quatrième action A4 n'influence pas les éléments voisins C1 et C3 de l'élément désigné C2.

L'opérateur ordonne alors au module de traitement MT de tester l'influence d'une cinquième action A5, représentative du deuxième type d'action, sur les voisins C1 et C3 de l'élément désigné C2.

Le module de traitement MT accède alors à la mémoire MY afin de récupérer la copie locale en cours E4 qu'elle stocke, puis, il intègre dans cette dernière la cinquième action A5 (en complément de la quatrième action A4), ce qui donne une cinquième copie locale en cours, matérialisée par une ellipse noire référencée E5, qu'il stocke également dans la mémoire MY et transmet au module de contrôle MC.

Le module de contrôle MC teste la cinquième copie locale en cours E5, et notamment sa cinquième action A5. On considère ici que cette cinquième action A5 influence les éléments voisins C1 et C3 de l'élément désigné C2. Le module de contrôle MC signale cette influence à l'opérateur, ainsi que sa ou ses causes.

L'opérateur détermine alors une sixième action A6, représentative du deuxième type d'action et qu'il espère sans influence sur les éléments voisins C1 et C3. Il ordonne alors au module de traitement MT de tester l'influence de cette sixième action A6 sur les voisins C1 et C3 de l'élément désigné C2.

Le module de traitement MT accède alors à la mémoire MY afin de récupérer la copie locale E4, antérieure à celle en cours E5, qu'elle stocke. Puis, il intègre dans cette dernière la sixième action A6 (en complément de la quatrième action A4), ce qui donne une sixième copie locale en cours, matérialisée par une ellipse grise référencée E6, qu'il stocke également dans la mémoire MY et transmet au module de contrôle MC.

Le module de contrôle MC teste la sixième copie locale en cours E6, et notamment sa sixième action A6. On considère ici que cette sixième action A6 n'influence pas les éléments voisins C1 et C3 de l'élément désigné C2.

L'opérateur ayant réussi à déterminer une suite de deux actions correctives (A4 et A6) permettant de remédier à une cause racine détectée par le module de diagnostic MD, il peut alors demander à l'outil d'optimisation OO d'instaurer ces deux actions correctives (A4 et A6) au niveau des équipements de réseau concernés NE qui gèrent ici la cellule C2 (élément initialement désigné).

L'outil d'optimisation OO dispose à cet effet d'un module de configuration MG classique, chargé de transformer les actions correctives reçues en commandes de configuration destinées aux équipements de réseau NE.

Le dispositif de contrôle D selon l'invention, et notamment son module de contrôle MC et son module de traitement MT, ainsi qu'éventuellement sa mémoire MY et sa base de règles BR, peuvent être réalisés sous la forme de circuits électroniques, de modules logiciels (ou informatiques), ou d'une combinaison de circuits et de logiciels.

L'invention ne se limite pas aux modes de réalisation de dispositif de contrôle, d'outil d'optimisation et de système de gestion de réseau décrits ci-avant, seulement à titre d'exemple, mais elle englobe toutes les variantes que pourra envisager l'homme de l'art dans le cadre des revendications ci-après.

Ainsi, dans ce qui précède on a décrit un exemple de dispositif de contrôle, selon l'invention, qui recevait des désignations d'éléments paramétrables et des données d'action(s) corrective(s) de l'opérateur du réseau. Mais, on peut envisager une variante dans laquelle les désignations d'éléments paramétrables et les données d'action(s) corrective(s) sont directement transmises au dispositif de contrôle par le module de diagnostic de l'outil d'optimisation, éventuellement sous le contrôle de l'opérateur. Dans ce cas, le dispositif de contrôle peut fournir au module de diagnostic les messages contenant le résultat du test qu'il a effectué sur chaque action corrective décidée par ce dernier. Le module de diagnostic peut être alors adapté de manière à déterminer de nouvelles actions correctives à tester, alternatives à de précédentes actions correctives considérées par le dispositif de contrôle comme susceptibles d'influencer des éléments voisins d'un élément initialement désigné.

## Revendications

1. Dispositif (D) de contrôle d'actions correctives destinées à des éléments paramétrables (Ci, NE) d'un réseau de communication radio, comprenant une base d'informations (BI) stockant des données primaires représentatives des valeurs des paramètres gérés desdits éléments (Ci, NE) et d'une topologie dudit réseau, **caractérisé en ce qu'**il comprend i) une base de règles (BR) propre à stocker des données représentatives de règles de contrôle de paramétrage approprié desdits éléments, ii) des moyens de traitement (MT) agencés, en cas de réception d'une désignation d'au moins un élément paramétrable (C2) dudit réseau, cause d'un problème au sein dudit réseau, et de données représentatives d'au moins une action corrective à appliquer audit élément désigné (C2), pour constituer une copie locale d'une partie desdites données primaires, stockées dans ladite base d'informations (BI) et représentatives dudit élément désigné (C2) et d'éléments (C1, C3) voisins de celui-ci et de la topologie associée à ces éléments désigné et voisins, et iii) des moyens de contrôle (MC) agencés pour appliquer certaines au moins desdites règles à ladite copie locale compte tenu de chaque action corrective désignée, de manière à déterminer l'influence de chaque action corrective désignée sur lesdits éléments désigné (C2) et voisins (C1, C3), et pour délivrer un message comportant des données représentatives de ladite influence.

2. Dispositif selon la revendication 1, **caractérisé en ce que** lesdits moyens de traitement (MT) sont agencés pour transmettre auxdits moyens de contrôle (MC) ladite copie locale intégrant chaque action corrective désignée.

3. Dispositif selon la revendication 2, **caractérisé en ce qu'**il comprend une mémoire (MY) couplée auxdits moyens de traitement (MT) et propre à stocker ladite copie locale intégrant chaque action corrective désignée, dite copie locale en cours.

4. Dispositif selon la revendication 3, **caractérisé en ce que** lesdits moyens de traitement (MT) sont agencés, en cas de réception de données représentatives d'au moins une nouvelle action corrective à appliquer audit élément désigné (C2), compte tenu de ladite copie locale en cours, pour extraire ladite copie locale en cours de ladite mémoire (MY) afin d'y intégrer chaque nouvelle action corrective désignée avant de la stocker dans ladite mémoire (MY) et de la transmettre auxdits moyens de contrôle (MC), afin qu'ils déterminent l'influence de chaque action corrective désignée sur lesdits éléments désigné (C2) et voisins (C1, C3).

5. Dispositif selon la revendication 4, **caractérisé en ce que** lesdits moyens de traitement (MT) sont agencés, en cas de réception de données représentatives d'au moins une nouvelle action corrective à appliquer audit élément désigné (C2), compte tenu d'une copie locale antérieure à celle en cours, pour extraire de ladite mémoire (MY) ladite copie locale antérieure à celle en cours afin d'y intégrer chaque nouvelle action corrective désignée avant de la stocker dans ladite mémoire (MY) et de la transmettre auxdits moyens de contrôle (MC), afin qu'ils déterminent l'influence de chaque action corrective désignée sur lesdits éléments désigné (C2) et voisins (C1, C3).

6. Dispositif selon l'une des revendications 3 à 5, **caractérisé en ce que** lesdits moyens de traitement (MT) sont agencés pour stocker dans ladite mémoire (MY) ladite copie locale initialement constituée, avant intégration de chaque action corrective désignée.

7. Dispositif selon la revendication 6, **caractérisé en ce que** lesdits moyens de traitement (MT) sont agencés, en cas de réception de données représentatives d'au moins une nouvelle action corrective à appliquer audit élément désigné (C2), compte tenu de ladite copie locale initiale, pour extraire ladite copie locale initiale de ladite mémoire (MY) afin d'y intégrer chaque nouvelle action corrective désignée avant de la transmettre auxdits moyens de contrôle (MC) afin qu'ils déterminent l'influence de chaque action corrective désignée sur lesdits éléments désigné et voisins.

8. Dispositif selon l'une des revendications 1 à 7, **caractérisé en ce que** lesdits moyens de contrôle (MC) sont agencés sous la forme d'un moteur de règles.

9. Dispositif selon l'une des revendications 1 à 8, **caractérisé en ce que** certaines au moins desdites actions correctives sont constituées d'une valeur de paramètre à instaurer en lieu et place d'une valeur de paramètre d'élément désigné dans une copie locale.

10. Dispositif selon l'une des revendications 1 à 9, **caractérisé en ce que** certaines au moins desdites règles sont agencées sous la forme d'une condition à vérifier suivie d'une action corrective à effectuer si ladite condition est vérifiée.

11. Outil d'optimisation (OO) de paramétrage d'éléments paramétrables (Ci, NE) d'un réseau de communication radio, comprenant une base d'informations (BI), stockant des données primaires représentatives des valeurs des paramètres gérés desdits éléments (Ci, NE) et d'une topologie dudit réseau, et des moyens de diagnostic (MD) agencés pour délivrer des désignations d'une cause d'un problème survenu au sein dudit réseau et d'au moins un élément paramétrable (C2) dudit réseau, cause dudit problème, **caractérisé en ce qu'**il comprend en outre un dispositif de contrôle (D) selon l'une des revendications précédentes, couplé à ladite base d'informations.

12. Outil selon la revendication 11, **caractérisé en ce qu'**il comprend des moyens de configuration (MG) agencés pour générer des commandes représentatives d'au moins une action corrective à appliquer audit élément désigné (C2), contrôlée par ledit dispositif de contrôle (D) et n'entraînant pas de dommage collatéral sur des éléments voisins (C1, C3) dudit élément désigné (C2), de manière à corriger ladite cause déterminée par lesdits moyens de diagnostic (MD).

13. Système de gestion de réseau (NMS) pour un réseau de communication radio, **caractérisé en ce qu'**il comprend un outil d'optimisation (00) selon l'une des revendications 11 et 12.

14. Système de gestion de réseau (NMS), pour un réseau de communication radio comportant un outil d'optimisation (OO) comprenant une base d'informations (BI), stockant des données primaires représentatives de valeurs de paramètres gérés d'éléments paramétrables (Ci, NE) dudit réseau et d'une topologie dudit réseau, et des moyens de diagnostic (MD) agencés pour délivrer des désignations d'une cause d'un problème survenu au sein dudit réseau et d'au moins un élément paramétrable (C2) dudit réseau, cause dudit problème, **caractérisé en ce qu'**il comprend un dispositif de contrôle (D) selon l'une des revendications 1 à 10, couplé audit outil d'optimisation (OO).
